Europäisches Patentamt

European Patent Office

Office européen des brevets

(11) Publication number: 0 348 375
A2

# EUROPEAN PATENT APPLICATION

(21) Application number: 89850211.7

(22) Date of filing: 21.06.89

(51) Int. Cl.⁴: **G 01 N 21/67**
**H 01 J 5/20**

(30) Priority: **22.06.88 FI 883013**

(43) Date of publication of application:
**27.12.89 Bulletin 89/52**

(84) Designated Contracting States:
**AT DE FR GB IT NL SE**

(71) Applicant: **OUTOKUMPU OY**
**Töölönkatu 4**
**SF-00100 Helsinki 10 (FI)**

(72) Inventor: **Järvinen, Marja-Leena**
**Hakolahdentie 27 A 5**
**SF-00100 Helsinki (FI)**

**Koskinen, Jouko Aarre Kalevi**
**Vattuniemenkatu 4 A 20**
**SF-00210 Helsinki (FI)**

(74) Representative: **Carminger, Lars**
**Carminger, Uusitalo & Nyberg Patentbyra AB Box 19055**
**S-104 32 Stockholm (SE)**

(54) Analyser sealing.

(57) The invention relates to a sealing used particularly in a portable or in an on-line analyser, by which sealing it is achieved a tightness between a sample and the analyser in order to perform the analysation in a desired gas atmosphere. According to the invention, in the sealing is used a semi-labyrinth sealing (3), which can be manufactured of metal, elastic material or ceramic material.

Bundesdruckerei Berlin

## Description

### ANALYSER SEALING

This invention relates to a sealing used in an analyser, particularly in a portable or in an on-line analyser, by which sealing it is achieved a tightness between a stabile sample and an analyser in order to perform the analysation in a desired gas atmosphere.

When analysing samples with the optical emission analysis it is created an electric discharge between the sample and the electrode of the probe. In the apparatuses which use optical emission analysis the sample is pressed to the probe. In the so created measuring chamber it is usually used an argon atmosphere during the measurement. Then oxygen which is a possible impurity in the gas atmosphere, weakens already in small contents the result of the analysis. Because in the optical emission analysis the sample is of a conductive material, as metal it is created between the analyser and the sample only a metal-to-metal pressure coupling. This kind of a coupling is sufficient for the sealing, when it is a question about a stabile analyser, but for example in a portable or in an on-line analyser it is not possible to create the same kind of a pressure coupling between the sample and the measuring chamber containing argon.

The sealing between a sample and an analyser in an optical emission analyser has been tried to improve for example by positioning a silicon mat between the sample and the analyser. Further, in the apparatus according to the DE patent application 2833324 in the sealing it is used an elastic sealing ring, an o ring. The use of a respective sealing ring is also described in the EP patent application 174374 and in the GB patent 1490991. However, the elastic sealing body having one part and mentioned in the references mentioned above does not necessarily give a sufficient sealing, because the gas components in the external atmosphere, as oxygen, can be adsorpted through this kind of an elastic sealing. Therefore in the stabile emission analyser in the laboratory the sealing can also be manufactured of a ceramic material, when the voltage contact between the analyser and the sample is arranged by means of the press or the contacting surface of the sample. This arrangement is, however, inconvenient, when it is a question about a portable or an on-line analyser.

The object of the present invention is to improve some of drawbacks of the prior art and to realize an improved sealing, particularly between the analyser and the sample in a portable or in an on-line analyser, in which sealing as a sealing medium it is utilized a sealing body consisting of many parts. The essential features of the invention are apparent from the appended claims.

According to the invention the resistance of flow of the impurity, as an oxygen-containing gas flowing from outside of the measuring chamber of an analyser is essentially increased by using a semi-labyrinth sealing known in itself between the analyser and the sample.

The semi-labyrinth sealing is a so-called non-contact sealing which is generally used in the treatment of liquids around rotating shafts. The semi-labyrinth sealing advantageously consists of several consecutive choke points, between which it is created a pressure difference by means of the flowing medium. Between two consecutive choke points there is a labyrinth chamber. The choke point is formed by a very thin sealing margin which reaches close to the surface of the opposed body.

In the semi-labyrinth sealing the labyrinth chamber has advantageously such a form, that the velocity energy of the flowing coming from the choke point is removed by being converted into thermal energy. In the following choke point it is in the same way created advantageously a wholly new flowing and a new pressure lowering which represents the velocity energy of this new flowing. If the distance between the choke points are choosen too small, it is possible in the semi-labyrinth sealing that the medium flowing by only one pressure lowering can spurt through several choke points.

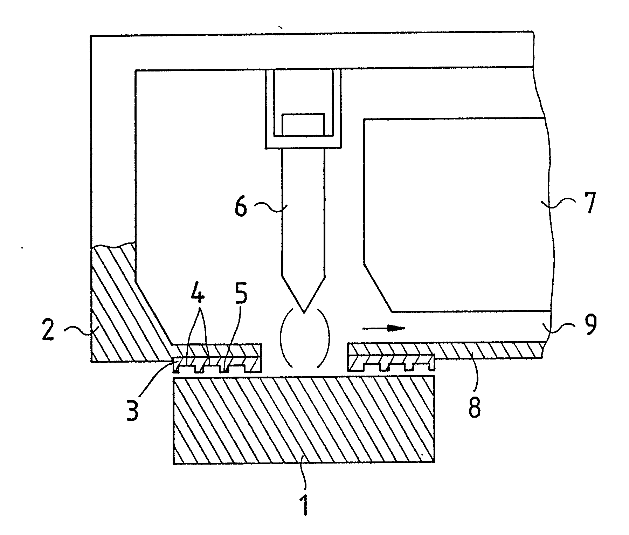

In the following the invention is explained in more details with reference to the appended drawing which is a schematical view of one preferred embodiment of the invention applied to an optical emission analyser.

According to the figure the sample 1 is pressed to the probe 2 of an optical emission analyser so that between the sample 1 and the probe 2 it is arranged a semi-labyrinth sealing 3 according to the invention. To the sealing 3 it is formed at least two labyrinth chambers 4 so that the choke point 4 between the labyrinth chambers 4 is in its width at least 50% about the width of the labyrinth chamber 4. In the figure, it is further described an electrode 6 being in the measuring chamber, by means of that electrode it is formed an electric discharge between the electrode 6 and the sample 1. The discharge evaporates some material off the sample surface and it is formed plasma, from which a distinctive spectrum for each element is conducted throught the slot 9 between the collimator 7 and the wall 8 of the probe for further treatment.

The semi-labyrinth sealing according to the invention is advantageously manufactured of metal, as brass or stainless steel, but the semi-labyrinth sealing according to the invention can also be manufactured for example of an elastic material, as rubber, or of a ceramic material.

The semi-labyrinth sealing according to the invention is advantageous between the sample and the measuring chamber of an optical emission analyser, but the sealing can also be used in analysers of other types in which between the stabile sample and the measuring chamber it is required a specially tight sealing. These kinds of analysers are for example portable x-ray analysers. Similarly, the analyser sealing created by a semi-labyrinth sealing according to the invention can be used in glow discharge lamps.

**Claims**

1. A sealing used in an analyser, particularly in a portable or in an on-line analyser, by which sealing it is achieved a tightness between a sample and the analyser in order to perform the analysation in a desired gas atmosphere, **characterized** in that in the sealing it is used a semi-labyrinth sealing (3).

2. An analyser sealing of claim 1, **characterized** in that the semi-labyrinth sealing (3) in the sealing is manufactured of metal.

3. An analyser sealing of claim 2, **characterized** in that the sealing (3) is manufactured of brass.

4. An analyser sealing of claim 2, **characterized** in that the sealing (3) is manufactured of stainless steel.

5. An analyser sealing of claim 1, **characterized** in that the sealing (3) is manufactured of elastic material, as rubber.

6. An analyser sealing of claim 1, **characterized** in that the sealing (3) is manufactured of ceramic material.

7. An analyser sealing of any of the preceding claims, **characterized** in that the semi-labyrinth sealing (3) is in an optical emission analyser.

8. An analyser of claims 1 to 6, **characterized** in that the semi-labyrinth sealing (3) is in an x-ray analyser.

9. An analyser of claims 1 to 6, **characterized** in that the semi-labyrinth sealing (3) is in a glow discharge lamp.

10. An analyser of any of the preceding claims, **characterized** in that the choke point (5) of the semi-labyrinth sealing (3) is in its width at least 50% of the width of the labyrinth chamber (4).